# EUROPÄISCHE PATENTSCHRIFT

(11) **EP 2 675 632 B1**
(45) Veröffentlichungstag und Bekanntmachung des Hinweises auf die Patenterteilung: **23.11.2016**
(21) Anmeldenummer: 11797253.9
(22) Anmeldetag: 16.12.2011
(51) Int. Cl.: B60C 9/18, B60C 9/20

(54) **FAHRZEUGLUFTREIFEN IN RADIALBAUART FÜR NUTZFAHRZEUGE**
VEHICLE TIRE OF RADIAL DESIGN FOR COMMERCIAL VEHICLES
PNEUMATIQUE DE VÉHICULE DE TYPE RADIAL DESTINÉ À DES VÉHICULES UTILITAIRES

(30) Priorität: 18.02.2011 DE 102011000821
(43) Veröffentlichungstag der Anmeldung: 25.12.2013
(73) Patentinhaber: Continental Reifen Deutschland GmbH, 30165 Hannover (DE)
(72) Erfinder: KLEFFMANN, Jens, 30453 Hannover (DE); BECKER, Theresia, 40625 Düsseldorf (DE)
(74) Vertreter: Preusser, Andrea
(86) Internationale Anmeldenummer: PCT/EP2011/073028
(87) Internationale Veröffentlichungsnummer: WO 2012/110142

(56) Entgegenhaltungen:
- US-A- 5 772 810
- US-A1- 2006 032 570
- US-A1- 2006 180 257
- US-B1- 6 311 751

## Beschreibung

Die Erfindung betrifft einen Fahrzeugluftreifen in Radialbauart für Nutzfahrzeuge mit einem vierlagigem Gürtel mit einer ersten, einer zweiten, einer dritten und einer vierten Gürtellage, wobei die erste Gürtellage radial innen und die letzte Gürtellage als radial äußerste Gürtellage des Gürtels angeordnet ist, wobei jede Gürtellage als Festigkeitsträger Stahlkorde enthält, die jeweils parallel zueinander verlaufen und in Bezug auf die Reifenumfangsrichtung geneigt sind, wobei die vierte Gürtellage die geringste Breite von allen Lagen aufweist, wobei die zweite und die dritte Gürtellage tragende Gürtellagen sind, deren Stahlkorde in Bezug auf die Reifenumfangsrichtung gegenläufig geneigt sind und wobei zwischen der zweiten und der dritten Gürtellage im Bereich der Gürtelkanten ein über den Umfang des Reifens umlaufendes Gummiprofil in Funktion eines sogenannten Gürtelpolsters angeordnet ist. Ein derartiger Fahrzeugluftreifen ist beispielsweise aus der gattungsgemäßen US 6311751 B1 bekannt.

Nutzfahrzeugreifen mit einem Gürtel, welcher zwei tragende Gürtellagen, die sogenannten "Arbeitslagen" aufweist, sind dem Fachmann bekannt.

Üblicherweise weist der Gürtel von Nutzfahrzeugreifen vier Lagen auf, welche aus in Gummimischungen eingebetteten Stahlkorden bestehen. Die radial innerste Lage wird bei einem 4-Lagen-Gürtel als "1.Gürtellage" oder nach ihrer Funktion als "Sperrlage" bezeichnet. Radial außen auf dieser sind die tragenden Gürtellagen, die 2. Gürtellage und die 3. Gürtellage in Funktion von den sogenannten "Arbeitslagen" angeordnet, wobei die 3. Gürtellage in der Regel schmaler als die 2. Gürtellage ist. Die radial äußere Arbeitslage wird von der 4. Gürtellage, der sogenannten "Schutzlage", abgedeckt.

Bei einer Deformation des Reifens, z.B. bei jeder Umdrehung des Reifens beim Durchlauf durch die Bodenaufstandsfläche treten hohe mechanische Kräfte insbesondere an den Gürtelkanten der tragenden Gürtellagen (zweite und dritte Gürtellage) auf. Diese hohe mechanische Belastung kann zu unerwünschten Rissinitiierungen an diesen Gürtelkanten führen und die Haltbarkeit des Reifens nachteilig beeinflussen. Um diesen Nachteil zu beseitigen, ist es beispielsweise aus der EP 0 976 585 A2 bekannt, ein Gummiprofil zur mechanischen Entkopplung dieser beiden tragenden Gürtellagen zwischen diesen anzuordnen. Ein derartiges Gummiprofil wird auch "Gürtelposter" genannt. Das Gummiprofil ist derart im Bereich der Gürtelkanten angeordnet, dass es an der Kante der zweiten Gürtellage beginnt und sich nach axial innen erstreckt.

Weitere Beispiele solcher Gummiprofile sind aus den Dokumenten US 2006/032570 A1, US 2006/180257 A1 und US 5772810 A bekannt.

Jedoch ist es wünschenswert, den Rollwiderstand des vorbeschriebenen Reifens mit Gummiprofil zwischen der zweiten und dritten Gürtellage zu verbessern. Zudem können noch immer Risse an der zweiten Gürtelkante initiiert werden.

Der Erfindung liegt somit die Aufgabe zugrunde, einen Fahrzeugluftreifen der eingangs genannten Art bereitzustellen, der eine gute Haltbarkeit, aber dennoch einen reduzierten Rollwiderstand aufweist.

Gelöst wird die gestellte Aufgabe erfindungsgemäß dadurch, dass das Gummiprofil derart angeordnet ist, dass es, gemessen von der Kante der dritten Gürtellage, weniger als 17 mm nach axial innen erstreckt ist und dass es derart nach axial außen erstreckt ist, dass es die Kante der zweiten Gürtellage nach axial außen vollständig überdeckt.

Überraschenderweise hat es sich gezeigt, dass der Rollwiderstand des Reifens reduzierbar ist, wenn die Ausdehnung des Gummipolsters nach axial innen, gemessen von der dritten Gürtelkante, weniger als 17mm beträgt. Zudem ist durch die Erstreckung des Gummiprofils nach axial außen über die zweite Gürtelkante hinaus und diese nach axial außen umschließend/ überdeckend, eine Rissinitiierung an dieser zweiten Gürtelkante wirkungsvoll vermieden.

"Von der Kante der dritten Gürtellage" meint: ausgehend von den Endpunkten jener Korde, die die 3. Gürtellage bilden.

Die Längenmessungen der axialen Erstreckung des Gummiprofils erfolgt parallel zur radial äußeren Kontur des Gummiprofils in axialer Richtung bis zum axial inneren Ende des Profils.

Die Mächtigkeit des Gummiprofils wird ausgehend von der Kante der dritten Gürtellage in radialer Richtung gemessen.

Der Rollwiderstand ist zudem reduzierbar, wenn das Gummiprofil, gemessen von der Kante der dritten Gürtellage, zwischen 3 mm und 14 mm, bevorzugt zwischen 3 mm und 10 mm und besonders bevorzugt zwischen 5 mm und 7 mm nach axial innen erstreckt ist.

Der Rollwiderstand ist ebenfalls zu reduzieren, wenn das Gummiprofil, gemessen von der radial inneren Kante der dritten Gürtellage in radialer Richtung, eine Mächtigkeit von 1,5 mm bis 6 mm, vorzugsweise von 2,5 mm bis 4 mm aufweist.

Vorteilhaft ist es, wenn der Gürtel ein Dreilagengürtel ist, wobei die erste Gürtellage rechtssteigend zwischen 40° und 90°, vorzugsweise 50° zur Umfangsrichtung geneigt ist, wobei die zweite Gürtellage rechtssteigend zwischen 10° und 35°, vorzugsweise 18° zur Umfangsrichtung geneigt ist und wobei die dritte Gürtellage linkssteigen zwischen 10° und 35°, vorzugsweise 18° zur Umfangsrichtung geneigt ist. Durch diesen Aufbau wird ein gleichmäßiger Reifenabrieb bei einer niedrigen Abriebsrate sichergestellt.

Zweckmäßig ist es, wenn die erste Gürtellage rechtssteigend zwischen 40° und 75°, vorzugsweise 50° zur Umfangsrichtung geneigt ist, die zweite Gürtellage rechtssteigend zwischen 10° und 35°, vorzugsweise 18° zur Umfangsrichtung geneigt ist, die dritte Gürtellage linkssteigen zwischen 10° und 35°, vorzugsweise 18° zur Umfangsrichtung geneigt ist und die vierte Gürtellage linkssteigend oder rechtssteigend zwischen 10° und 90° zur Umfangsrichtung geneigt ist. Durch diesen Aufbau wird ein besonders gleichmäßiger Reifenabrieb bei einer besonders niedrigen Abriebsrate sichergestellt.

In einer alternativen Ausführung kann der Gürtel wenigstens eine Gürtellage ausweisen, welche aus zwei axial nebeneinanderliegenden Gürtellagen aufgebaut ist. Eine solche Gürtelkonstruktion wird als "split belt" bezeichnet und ist dem Fachmann bekannt.

Vorteilhaft ist es, wenn die Gummierung der zweiten und dritten Gürtellage eine höhere Härte und/oder Steifigkeit als das Gummiposter aufweist. Dadurch erfolgt eine Verlagerung der Deformationen von der Gürtelkante in das Gürtelpolter. Dies führt zu einer erhöhten strukturellen Steifigkeit.

Zweckmäßig ist es, wenn die dritte Gürtellage eine Gummierungsschicht aufweist, die silikagefüllt ist und dass die vierte Gürtellage eine Gummierungsschicht aufweist, die rußgefüllt ist. Silikagefüllte Mischungen haben gegenüber rußgefüllten Mischungen unter bestimmten Beanspruchungsbedingungen vorteilhafte Rissbeständigkeitseigenschaften. Rußmischungen bieten, im Vergleich zu Silikamischungen, für die eingebetteten Korde eine bessere Korrosionsbeständigkeit.
"Silikagefüllt" meint eine Gummierungsschicht, die bei einer Gesamtfüllstoffmenge von 100 Gew-% mindestens 60 Gew-% Silika aufweist.
"Rußgefüllt" meint eine Gummierungsschicht, die bei einer Gesamtfüllstoffmenge von 100 Gew-% mindestens 60 Gew-% Ruß aufweist.
"Gummierungsschicht" bezeichnet die Gummimischung, in die die Festigkeitsträger eingebettet sind.

Zweckmäßig ist es, wenn die Stahlkorde einen Durchmesser von 1,1 mm bis 2,0 mm, eine Festigkeit von 1500 N bis 3500 N und vorzugsweise die Konstruktion 3 x 0,2 mm + 6 x 0,33 mm aufweisen. Durch die Auswahl dieser Korde wird eine niedrige Abriebsrate sichergestellt.

Vorteilhaft ist es, wenn auf einen wrap um die zweite und/ oder dritte Gürtelkante verzichtet ist. Ein wrap umschließt das Ende der Gürtellage, so daß während des Reifenkonfektion ggf. eingeschlossene Luft nicht von den Korden aufgenommen werden kann. Solche nicht von Korden aufgenommene Luftpolster können zu einer Rissinitierung führen, was die Runderneuerungsfähigkeit des Reifens verschlechtert.
"wrap" meint ein Gummibauteil, welches die Gürtelkante umfasst (oben, unten, und seitlich).

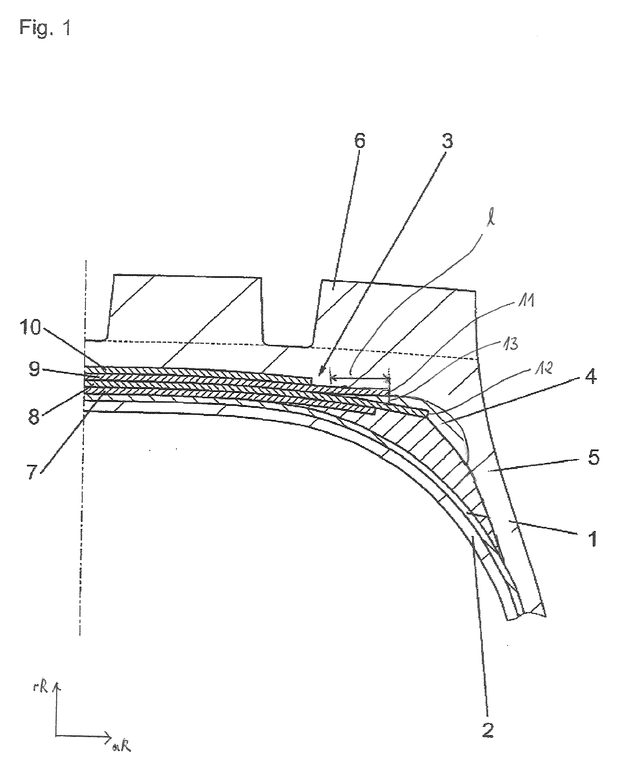

Weitere Merkmale, Vorteile und Einzelheiten der Erfindung werden nun anhand der Zeichnung, die ein schematisches Ausführungsbeispiel darstellt, näher beschrieben.

Die einzige Figur zeigt einen Teilquerschnitt durch die eine Hälfte eines Fahrzeugluftreifens für Nutzfahrzeuge im Bereich des Gürtels und Laufstreifens. Der Fahrzeugreifen weist in einer üblichen Standardkonstruktion eine Karkasse 1 mit Stahlkorden als Festigkeitsträgern, eine luftdichte Innenschicht 2, einen mehrlagigen Gürtel 3, im Bereich der Gürtelkanten ein angeordnetes Gummiprofil 4, das sogenannte Gürtelposter, eine Seitenwand 5 und einen profilierten Laufstreifen 6 auf.

Der Gürtel 3 weist vier Gürtellagen 7, 8, 9 und 10 auf, wobei die vierte, radial äußerste Gürtellage 10 die geringste Breite von allen Lagen aufweist und die sogenannte Schutzlage bildet. Die erste Gürtellage 7 ist die sogenannte Sperrlage, die zweite Gürtellage 8 und die dritte Gürtellage 9 sind die tragenden Gürtellagen, die sogenannten Arbeitslagen. Die breiteste Gürtellage ist die zweite Gürtellage 8, welche demnach die erste Gürtellage 7 komplett überdeckt. Die dritte Gürtellage 9 ist etwas breiter als oder gleich breit wie die erste Gürtellage 7. Die vierte Gürtellage 10 kann auch gleich breit zur dritten Gürtellage 9 ausgeführt sein. Sämtliche Gürtellagen 7, 8, 9, 10 bestehen aus in eine Gummimischung, der Gürtelgummierung, eingebetteten Festigkeitsträgern aus Stahlkord, beispielsweise der Konstruktion 3 x 0,2 mm + 6 x 0,35 mm. Es können in den Gürtellagen auch Stahlkorde anderer Konstruktionen verwendet werden.

Das Gummiprofil 4 ist derart angeordnet, dass es, gemessen von der Kante 11 der dritten Gürtellage 9, in einer Länge 1 von weniger als 17 mm, hier 7mm, nach axial innen erstreckt ist und dass es derart nach axial außen erstreckt ist, dass es die Kante 12 der zweiten Gürtellage 8 nach axial außen vollständig überdeckt. Das Gummiprofil 4 hat, gemessen von der Kante 11 der dritten Gürtellage 9 in radialer Richtung, eine Mächtigkeit 13 von 3 mm. Die Gummierung der zweiten und dritten Gürtellage 8, 9 weist eine höhere Härte und/oder Steifigkeit als das Gummiposter 4 auf. Auf einen wrap um die dritte Gürtelkante ist verzichtet.

Erfindungsgemäße Nutzfahrzeug-Radialreifen sind insbesondere für die Verwendung als LKW-Bus- und Anhängerreifen geeignet.

Die nachfolgende Tabelle zeigt Versuchsergebnisse in Bezug auf den Rollwiderstand und die strukturelle Haltbarkeit des Gürtels eines Referenzreifens im Vergleich zu baugleichen Versuchsreifen 1-3, wobei die Versuchsreifen 1, 2 erfindungsgemäß ausgeführt sind, während der Versuchsreifen 3 ohne Gummiprofil (Gürtelpolster) ausgeführt ist.

**Tabelle**

| | Referenzreifen | Versuchsreifen 1 | Versuchsreifen 2 | Versuchsreifen 3 |
|---|---|---|---|---|
| Erstreckung des Gummiprofils [in mm] nach axial innen, ausgehend von der 3. Gürtelkante | 22 | 15 | 7 | ohne Gummiprofil |
| Rollwiderstand [in %] (Trommelprüfung nach ISO 28580) | 100 | 99 | 98 | 98,5 |
| Haltbarkeit des Gürtels [in %] (Trommelprüfung) | 100 | 100 | 105 | 80 |

Es zeigt sich, dass die Versuchsreifen 1 - 3 einen verbesserten Rollwiderstand aufweisen. Die strukturelle Haltbarkeit ist bei dem Versuchsreifen 1 gleich der des Referenzreifens, die strukturelle Haltbarkeit des Versuchsreifens 2 ist um 5 Prozent gegenüber dem Referenzreifen verbessert, während die strukturelle Haltbarkeit des Versuchsreifens 3 ohne Gummiprofil um 20 % gegenüber dem Referenzreifen verschlechtert ist. Die Bestimmung der Gürtelhaltbarkeit erfolgte mittels eines proprietären Trommeltests.

### Liste der Bezugszeichen

- 1: Karkasse
- 2: Innenschicht
- 3: Gürtel
- 4: Gummiprofil
- 5: Seitenwand
- 6: Laufstreifen
- 7: Erste Gürtellage
- 8: Zweite Gürtellage
- 9: Dritte Gürtellage
- 10: Vierte Gürtellage
- 11: Kante der dritten Gürtellage
- 12: Kante der zweiten Gürtellage
- 13: Mächtigkeit des Gummiprofils
- 1: Länge des Gummiprofils nach axial innen
- rR: radiale Richtung
- aR: axiale Richtung

## Patentansprüche

1. Fahrzeugluftreifen in Radialbauart für Nutzfahrzeuge mit einem vierlagigen Gürtel (3) mit einer ersten, einer zweiten, einer dritten und einer vierten Gürtellage (7, 8, 9,10), wobei die erste Gürtellage (7) radial innen und die letzte Gürtellage als radial äußerste Gürtellage des Gürtels (3) angeordnet ist, wobei jede Gürtellage (7, 8, 9,10) als Festigkeitsträger Stahlkorde enthält, die jeweils parallel zueinander verlaufen und in Bezug auf die Reifenumfangsrichtung geneigt sind, wobei die vierte Gürtellage (10) die geringste Breite von allen Lagen aufweist, wobei die zweite und die dritte Gürtellage (8, 9) tragende Gürtellagen sind, deren Stahlkorde in Bezug auf die Reifenumfangsrichtung gegenläufig geneigt sind und wobei zwischen der zweiten und der dritten Gürtellage (8, 9) im Bereich der Gürtelkanten (11, 12) ein über den Umfang des Reifens umlaufendes Gummiprofil (4) in Funktion eines sogenannten Gürtelpolsters angeordnet ist,
**dadurch gekennzeichnet,**
**dass** das Gummiprofil (4) derart angeordnet ist, dass es, gemessen von der Kante (11) der dritten Gürtellage, weniger als 17 mm nach axial innen erstreckt ist und dass es derart nach axial außen erstreckt ist, dass es die Kante (12) der zweiten Gürtellage nach axial außen vollständig überdeckt.

2. Fahrzeugluftreifen nach Anspruch 1, **dadurch gekennzeichnet, dass** das Gummiprofil (4), gemessen von der Kante (11) der dritten Gürtellage, zwischen 3 mm und 14 mm, bevorzugt zwischen 3 mm und 10 mm und besonders bevorzugt zwischen 5 mm und 7 mm nach axial innen erstreckt ist.

3. Fahrzeugluftreifen nach Anspruch 1 oder 2, **dadurch gekennzeichnet, dass** Gummiprofil (4), gemessen an der Kante (11) der dritten Gürtellage in radialer Richtung, eine Dicke (13) von 1,5 mm bis 6 mm, vorzugsweise von 2,5 mm bis 4 mm aufweist.

4. Fahrzeugluftreifen nach Anspruch 1 bis 3, **dadurch gekennzeichnet, dass** der Gürtel (3) ein Vierlagengürtel ist, dass die erste Gürtellage (7) rechtssteigend zwischen 40° und 90°, vorzugsweise 50° zur Umfangsrichtung geneigt ist, dass die zweite Gürtellage (8) rechtssteigend zwischen 10° und 35°, vorzugsweise 18° zur Umfangsrichtung geneigt ist, dass die dritte Gürtellage (9) linkssteigend zwischen 10° und 35°, vorzugsweise 18° zur Umfangsrichtung geneigt ist und dass die vierte Gürtellage (10) linkssteigend oder rechtssteigend zwischen 10° und 90° zur Umfangsrichtung geneigt ist.

5. Fahrzeugluftreifen nach einem oder mehreren der vorangehenden Ansprüche, **dadurch gekennzeichnet, dass** der Gürtel (3) wenigstens eine Gürtellage ausweist, welche aus zwei axial nebeneinanderliegenden Gürtellagen aufgebaut ist.

6. Fahrzeugluftreifen nach einem oder mehreren der vorangehenden Ansprüche, **dadurch gekennzeichnet, dass** die Gummierung der zweiten und dritten Gürtellage (8, 9) eine höhere Härte und/oder Steifigkeit als das Gummiposter (4) aufweist.

7. Fahrzeugluftreifen nach einem oder mehreren der Ansprüche 1-3, 5-7, **dadurch gekennzeichnet, dass** die dritte Gürtellage (9) eine Gummierungsschicht aufweist, die silikagefüllt ist und dass die vierte Gürtellage (10) eine Gummierungsschicht aufweist, die rußgefüllt ist.

8. Fahrzeugluftreifen nach einem oder mehreren der vorangehenden Ansprüche, **dadurch gekennzeichnet, dass** die Stahlkorde einen Durchmesser von 1,1 mm bis 2,0 mm, eine Festigkeit von 1500 N bis 3500 N und vorzugsweise die Konstruktion 3 x 0,2 mm + 6 x 0,33 mm aufweisen.

9. Fahrzeugluftreifen nach einem oder mehreren der vorangehenden Ansprüche, **dadurch gekennzeichnet, dass** auf einen wrap um die zweite und/ oder dritte Gürtelkante verzichtet ist.

## Claims

1. Pneumatic vehicle tyre of a radial type of construction for commercial vehicles comprising a four-ply breaker belt (3) with a first, a second, a third and a fourth belt ply (7, 8, 9, 10), wherein the first belt ply (7) is arranged radially on the inside and the last belt ply is arranged as the radially outermost belt ply of the breaker belt (3), wherein each belt ply (7, 8, 9, 10) contains steel cords as reinforcing elements, which respectively run parallel to one another and are inclined with respect to the circumferential direction of the tyre, wherein the fourth belt ply (10) has the smallest width of all the plies, wherein the second and third belt plies (8, 9) are load-bearing belt plies, the steel cords of which are inclined oppositely with respect to the circumferential direction of the tyre, and wherein arranged between the second and third belt plies (8, 9) in the region of the belt edges (11, 12) there is a rubber profile (4), which runs around the circumference of the tyre and has the function of a so-called belt pad,
**characterized**
**in that** the rubber profile (4) is arranged in such a way that, measured from the edge (11) of the third belt ply, it is made to extend axially inwards by less than 17 mm and in that it is made to extend axially outwards in such a way that it completely covers the edge (12) of the second belt ply in the axially outward direction.

2. Pneumatic vehicle tyre according to Claim 1, **characterized in that**, measured from the edge (11) of the third belt ply, the rubber profile (4) is made to extend axially inwards by between 3 mm and 14 mm, preferably between 3 mm and 10 mm and particularly preferably between 5 mm and 7 mm.

3. Pneumatic vehicle tyre according to Claim 1 or 2, **characterized in that**, measured from the edge (11) of the third belt ply, the rubber profile (4) has in the radial direction a thickness (13) of 1.5 mm to 6 mm, preferably of 2.5 mm to 4 mm.

4. Pneumatic vehicle tyre according to Claims 1 to 3, **characterized in that** the breaker belt (3) is a four-ply belt, **in that** the first belt ply (7) is inclined in a right-handed sense between 40° and 90°, preferably 50°, in relation to the circumferential direction, **in that** the second belt ply (8) is inclined in a right-handed sense between 10° and 35°, preferably 18°, in relation to the circumferential direction, **in that** the third belt ply (9) is inclined in a left-handed sense between 10° and 35°, preferably 18°, in relation to the circumferential direction and **in that** the fourth belt ply (10) is inclined in a left-handed sense or right-handed sense between 10° and 90° in relation to the circumferential direction.

5. Pneumatic vehicle tyre according to one or more of the preceding claims, **characterized in that** the breaker belt (3) has at least one belt ply that is made up of two belt plies lying axially one next to the other.

6. Pneumatic vehicle tyre according to one or more of the preceding claims, **characterized in that** the rubberizing of the second and third belt plies (8, 9) has a greater hardness and/or stiffness than the rubber pad (4).

7. Pneumatic vehicle tyre according to one or more of Claims 1-3 and 5-7, **characterized in that** the third belt ply (9) has a rubberizing layer which is silica-filled and **in that** the fourth belt ply (10) has a rubberizing layer which is carbon-black-filled.

8. Pneumatic vehicle tyre according to one or more of the preceding claims, **characterized in that** the steel cords have a diameter of 1.1 mm to 2.0 mm, a strength of 1500 N to 3500 N and preferably the structure 3 × 0.2 mm + 6 × 0.33 mm.

9. Pneumatic vehicle tyre according to one or more of the preceding claims, **characterized in that** there is no wrap around the second and/or third belt edge.

## Revendications

1. Pneu de véhicule de construction radiale pour véhicules utilitaires comprenant une ceinture à quatre plis (3) avec un premier, un deuxième, un troisième et un quatrième pli de ceinture (7, 8, 9, 10), le premier pli de ceinture (7) étant disposé radialement à l'intérieur et le dernier pli de ceinture étant disposé sous forme de pli de ceinture radialement le plus extérieur de la ceinture (3), chaque pli de ceinture (7, 8, 9, 10) contenant, en tant que renforts, des fils d'acier qui s'étendent à chaque fois parallèlement les uns aux autres et qui sont inclinés par rapport à la direction périphérique du pneu, le quatrième pli de ceinture (10) présentant la plus faible largeur de tous les plis, le deuxième et le troisième pli de ceinture (8, 9) étant des plis de ceinture porteurs dont les fils d'acier sont inclinés en sens opposé par rapport à la direction périphérique du pneu et entre le deuxième et le troisième pli de ceinture (8, 9), dans la région des bords de ceinture (11, 12), étant disposé un profil en caoutchouc (4) s'étendant sur la périphérie du pneu et ayant pour fonction ce qu'on appelle un rembourrage de ceinture,
**caractérisé en ce que**
le profil en caoutchouc (4) est disposé de telle sorte que, mesuré depuis le bord (11) du troisième pli de ceinture, il s'étende sur moins de 17 mm axialement vers l'intérieur et **en ce qu'**il s'étend axialement vers l'extérieur de telle sorte qu'il recouvre complètement axialement vers l'extérieur le bord (12) du deuxième pli de ceinture.

2. Pneu de véhicule selon la revendication 1, **caractérisé en ce que** le profil en caoutchouc (4), mesuré depuis le bord (11) du troisième pli de ceinture, s'étend axialement vers l'intérieur sur entre 3 mm et 14 mm, de préférence entre 3 mm et 10 mm et particulièrement préférablement entre 5 mm et 7 mm.

3. Pneu de véhicule selon la revendication 1 ou 2, **caractérisé en ce que** le profil en caoutchouc (4), mesuré au niveau du bord (11) du troisième pli de ceinture dans la direction radiale, présente une épaisseur (13) de 1,5 mm à 6 mm, de préférence de 2,5 mm à 4 mm.

4. Pneu de véhicule selon les revendications 1 à 3, **caractérisé en ce que** la ceinture (3) est une ceinture à quatre plis, **en ce que** le premier pli de ceinture (7) est incliné en montant à droite entre 40° et 90°, de préférence à 50° par rapport à la direction périphérique, **en ce que** le deuxième pli de ceinture (8) est incliné en montant à droite entre 10° et 35°, de préférence à 18° par rapport à la direction périphérique, **en ce que** le troisième pli de ceinture (9) est incliné en montant à gauche entre 10° et 35°, de préférence à 18° par rapport à la direction périphérique et **en ce que** le quatrième pli de ceinture (10) est incliné en montant à gauche ou en montant à droite entre 10° et 90° par rapport à la direction périphérique.

5. Pneu de véhicule selon l'une quelconque ou plusieurs des revendications précédentes, **caractérisé en ce que** la ceinture (3) présente au moins un pli de ceinture qui est constitué de deux plis de ceinture adjacents axialement.

6. Pneu de véhicule selon l'une quelconque ou plusieurs des revendications précédentes, **caractérisé en ce que** le caoutchoutage du deuxième et du troisième pli de ceinture (8, 9) présente une plus grande dureté et/ou rigidité que le rembourrage en caoutchouc (4).

7. Pneu de véhicule selon l'une quelconque ou plusieurs des revendications 1 à 3, 5 à 7, **caractérisé en ce que** le troisième pli de ceinture (9) présente un pli de caoutchoutage qui est rempli de silice et **en ce que** le quatrième pli de ceinture (10) présente un pli de caoutchoutage qui est rempli de suie.

8. Pneu de véhicule selon l'une quelconque ou plusieurs des revendications précédentes, **caractérisé en ce que** les fils d'acier présentent un diamètre de 1,1 mm à 2,0 mm, une résistance de 1500 N à 3500 N et de préférence une construction de 3 x 0,2 mm + 6 x 0,33 mm.

9. Pneu de véhicule selon l'une quelconque ou plusieurs des revendications précédentes, **caractérisé en ce qu'**un enveloppement autour du deuxième et/ou du troisième bord de ceinture est omis.
